# EUROPÄISCHE PATENTSCHRIFT

(11) **EP 2 520 832 B1**
(45) Veröffentlichungstag und Bekanntmachung des Hinweises auf die Patenterteilung: **26.06.2019**
(21) Anmeldenummer: 12002580.4
(22) Anmeldetag: 12.04.2012
(51) Int. Cl.: F16H 61/688, F16H 63/34

(54) **Kupplungsgetriebe**
Clutch transmission
Engrenage à couplage

(30) Priorität: 06.05.2011 DE 102011100857
(43) Veröffentlichungstag der Anmeldung: 07.11.2012
(73) Patentinhaber: Audi AG, 85045 Ingolstadt (DE)
(72) Erfinder: Schuller, Dietmar, 93336 Altmannstein (DE); Bauer, Martin, 85053 Ingolstadt (DE)

(56) Entgegenhaltungen:
- WO-A1-2010/083862
- DE-A1-102004 033 362
- DE-U1-202007 014 903
- ANONYM: 'Audi A8'10 Kraftübertragung' PATENT APPLICATION INFORMATION RETRIEVAL (PAIR), [Online] 26 Juni 2012, INGOLSTADT, Seiten FP - 68, XP002757778 AUDi SERVICE TRAINING Gefunden im Internet: <URL:http://portal.uspto.gov/pair/PublicPai r> [gefunden am 2016-05-18]

## Beschreibung

Die Erfindung betrifft ein Kupplungsgetriebe, insbesondere Doppelkupplungsgetriebe für ein Fahrzeug, insbesondere Kraftfahrzeug, mit mindestens einem Schaltgetriebe, das eine hydraulisch betätigbare Kupplung und mindestens einen hydraulisch betätigbaren Gangsteller umfasst, und mit einem ein druckloses Hydraulikmedium bereitstellenden Tank sowie eine druckbeaufschlagtes Hydraulikmedium bereitstellende Druckquelle umfassenden Hydraulikkreis.

Doppelkupplungsgetriebe werden bevorzugt in Personenkraftwagen eingesetzt. Ein Doppelkupplungsgetriebe weist im Allgemeinen zwei koaxial zueinander angeordnete Getriebeeingangswellen auf, die jeweils einem Schaltgetriebe, in diesem Fall auch als Teilgetriebe bezeichnet, zugeordnet sind. Jeder der Getriebeeingangswellen ist eine Kupplung zugeordnet, über die die Getriebeeingangswelle des jeweiligen Schaltgetriebes kraftschlüssig mit dem Abtrieb eines Motors, vorzugsweise eines Verbrennungsmotors eines Kraftfahrzeugs, gekoppelt werden kann. Ein erstes der beiden Schaltgetriebe umfasst typischerweise die ungeraden Gänge, während ein zweites der Teilgetriebe die geraden Gänge sowie den Rückwärtsgang umfasst. Einfache Kupplungsgetriebe umfassen in der Regel nur eine Kupplung sowie nur ein Schaltgetriebe, mit welchem alle Gänge des Kupplungsgetriebes geschaltet werden können.

Während der Fahrt ist typischerweise eines der Schaltgetriebe aktiv, was bedeutet, dass die diesem Schaltgetriebe zugeordnete Getriebeeingangswelle über die ihr zugeordnete Kupplung mit dem Motor gekoppelt ist. In dem aktiven Schaltgetriebe ist ein Gang eingelegt, der eine momentane Getriebeübersetzung bereitstellt. Eine Steuerung ermittelt, ob abhängig von der Fahrsituation der nächst höhere oder nächst niedrige Gang eingelegt werden soll. Dieser voraussichtlich als nächstes verwendete Gang wird in dem zweiten, inaktiven Schaltgetriebe eingelegt. Für einen Gangwechsel wird dann die Kupplung des inaktiven Schaltgetriebes geschlossen, während die Kupplung des aktiven Schaltgetriebes geöffnet wird. Bevorzugt wird, wenn sich das Öffnen der Kupplung des aktiven Schaltgetriebes und das Schließen der Kupplung des inaktiven Schaltgetriebes derart überschneiden, dass keine oder nur eine geringfügige Kraftflussunterbrechung vom Motor auf die Antriebswelle des Kraftfahrzeugs gegeben ist. In Folge des Gangwechsels wird das zuvor aktive Schaltgetriebe inaktiv, während das zuvor inaktive Schaltgetriebe zum aktiven Schaltgetriebe wird. Anschließend kann in dem nun inaktiven Teilgetriebe der voraussichtlich als nächstes benötigte Gang eingelegt werden.

Das Ein- und Auslegen der Gänge erfolgt über Elemente, bevorzugt über Schaltschienen, die von Hydraulikzylindern, den sogenannten, vorstehend bereits genannten Schaltzylindern, betätigt werden. Die Hydraulikzylinder sind bevorzugt als doppeltwirkende Hydraulikzylinder, insbesondere Gleichlaufzylinder oder Differenzialzylinder, ausgebildet, sodass jedem Schaltzylinder vorzugsweise zwei Gänge zugeordnet sein können. Alternativ können auch einfach wirkende Hydraulikzylinder vorgesehen sein. Die Hydraulikzylinder, welche die Elemente, insbesondere Schaltschienen, betätigen, werden auch als Gangstellerzylinder bezeichnet. Ein als Gleichlaufzylinder ausgebildeter Gangstellerzylinder, dem insbesondere zwei Gänge zugeordnet sind, weist bevorzugt drei Schaltpositionen auf, wobei insoweit in einer ersten ein bestimmter Gang, in einer zweiten ein anderer, bestimmter Gang und in einer dritten keiner der beiden genannten Gänge eingelegt ist.

Auch die den beiden Schaltgetrieben zugeordneten Kupplungen werden hydraulisch betätigt, also geschlossen beziehungsweise geöffnet. Es wird bevorzugt, dass die Kupplungen jeweils schließen, wenn sie mit Hydraulikdruck beaufschlagt werden, während sie geöffnet sind, wenn kein Hydraulikdruck anliegt, d.h., ein der jeweiligen Kupplung zugeordneter Hydraulikzylinder, der - wie vorstehend erwähnt - auch Kupplungszylinder genannt wird, druckentlastet ist.

Im Übrigen ist die Funktionsweise eines Doppelkupplungsgetriebes an sich bekannt, sodass hier nicht näher darauf eingegangen wird.

Der in den vorstehenden Absätzen beschriebene Aufbau und die dort erläuterte Funktionsweise gilt bevorzugt auch beim oder im Zusammenhang mit dem Gegenstand der Erfindung.

Wie bereits angedeutet, werden Kupplungsgetriebe durch einen Hydraulikkreis sowohl gesteuert beziehungsweise geregelt als auch gekühlt. Dieser Hydraulikkreis, beziehungsweise Baugruppen davon, sowie damit verknüpfte Verfahren sind Gegenstand der Erfindung.

Darüber hinaus sind Fahrzeuggetriebe mit einer sogenannten Parksperre bekannt, welche bei entsprechender Betätigung das Getriebe sperrt und somit insbesondere Antriebsräder des Fahrzeugs blockiert. Die Parksperre ist üblicherweise elektromotorisch oder hydraulisch betätigbar.

Die deutsche Offenlegungsschrift DE 196 25 019 A1 offenbart ein entsprechendes System mit einer betätigbaren Parksperre eines Fahrzeuggetriebes. Aus der DE 2004 033 362 B4 ist weiterhin ein Hydraulikkreis für ein Doppelkupplungsgetriebe bekannt, das zwei Kupplungen umfasst, denen jeweils ein Druckregelventil vorgeschaltet ist. Parallel zu den Druckregelventilen ist ein Freigabeventil vorgesehen, das bei Betätigung die Parksperre mit druckbeaufschlagtem Hydraulikmedium versorgt.

Aus der gattungsgemäßen Offenlegungsschrift WO 2010/083862 A1 ist bereits ein Kupplungsgetriebe bekannt, das als Doppelkupplungsgetriebe ausgebildet ist und dazu zwei hydraulisch betätigbare Kupplungen sowie mehrere hydraulisch betätigbare Gangsteller aufweist, sowie ein Hydrauliksystem zum Betätigen der Kupplungen und der Gangsteller, das einen Tank, eine Druckquelle sowie mehrere Schaltventile und Druckregelventile aufweist. Außerdem ist in das Hydrauliksystem eine Parkbremseinrichtung für ein das Kupplungsgetriebe aufweisendes Kraftfahrzeug integriert. Ein ähnliches Kupplungsgetriebe ist auch aus der Offenlegungsschrift DE 10 2004 033 362 A1 bereits bekannt.

Der Erfindung liegt die Aufgabe zugrunde, ein Doppelkupplungsgetriebe zu schaffen, das mit geringem Aufwand und einer geringen Anzahl an Einzelkomponenten die Effizienz und Funktionalität des Hydraulikkreises erhöht.

Die der Erfindung zugrundeliegende Aufgabe wird durch ein Kupplungsgetriebe mit den Merkmalen des Anspruchs 1 gelöst. Das erfindungsgemäße Kupplungsgetriebe hat den Vorteil, dass bei Betätigung der Parksperre automatisch mindestens ein Teilkreis des Hydraulikkreises und/oder mindestens eine Teilfunktion des Kupplungs- beziehungsweise Doppelkupplungsgetriebes mitgeschaltet wird. So besteht ein wesentlicher Vorteil darin, dass, wenn die Parksperre eingelegt wird, automatisch mindestens eine Teilfunktion des Doppelkupplungsgetriebes deaktiviert wird, wodurch insbesondere Energie gespart werden kann, und zum anderen die Sicherheit des Kupplungsgetriebes erhöht wird. Erfindungsgemäß ist hierzu vorgesehen, dass der jeweiligen Kupplung zu deren Betätigung jeweils ein erstes Druckregelventil und dem jeweiligen Gangsteller mindestens ein zweites Druckregelventil vorgeschaltet ist, wobei wenigstens eines dieser Druckregelventile mit einer vorgeschalteten Schalteinrichtung verbunden ist, die das wenigstens eine Druckregelventil und eine hydraulisch betätigbare Parksperre entweder mit der Druckquelle oder mit dem Tank verbindet. Es ist also vorgesehen, dass zumindest eines der Druckregelventile, die den Kupplungen und/oder den Gangstellern vorgeschaltet sind, der Schalteinrichtung nachgeschaltet ist, wobei die Schalteinrichtung ebenfalls mit der Parksperre verbunden ist. Besonders bevorzugt sind dabei die Parksperre und das entsprechende Druckregelventil an dem gleichen Anschluss der Schalteinrichtung angeschlossen oder weisen eine gemeinsame stromabwärts der Schalteinrichtung liegende Versorgungsleitung auf. Durch Druckbeaufschlagung der Parksperre mit Hydraulikmedium wird diese gelöst beziehungsweise ausgelegt. Hierdurch wird erreicht, dass beim Einlegen der Parksperre automatisch auch das mindestens eine Druckregelventil drucklos geschaltet und somit die dadurch eingestellte Funktion deaktiviert wird. Ist das Druckregelventil beispielsweise den Gangstellern vorgeschaltet, so wird beim Einlegen der Parksperre automatisch die Schaltmechanik des Getriebes nicht mehr mit Hydraulikmedium versorgt, sodass mittels der Gangsteller kein Einstellen eines Gangs mehr erfolgen kann. Im eingelegten Zustand der Parkbremse ist dies aber auch nicht zwingend erforderlich oder von Nutzen. Hierdurch kann also durch Betätigung der Parksperre gleichzeitig Energie dahingehend gespart werden, dass die Gangsteller nicht weiter mit Hydraulikmedium versorgt werden müssen und entsprechend die Leistung der Druckquelle, insbesondere einer das Hydraulikmedium mit Druck beaufschlagenden Pumpe, verringert werden kann.

Bevorzugt sind die ersten Druckregelventile und/oder die zweiten Druckregelventile mit der Schalteinrichtung verbunden. Wie bereits erwähnt, wird bevorzugt durch Verbinden des zweiten Druckregelventils mit der Schalteinrichtung die Gangstelleinrichtung deaktiviert, wenn die Parksperre eingelegt wird. Vorzugsweise sind alternativ die ersten Druckregelventile oder zumindest eines der ersten Druckregelventile mit der Schalteinrichtung verbunden, sodass bei Einlegen der Parksperre gleichzeitig die eine oder beide Kupplungen drucklos geschaltet werden. Besonders bevorzugt werden die ersten Druckregelventile und das mindestens eine zweite Druckregelventil mit der Schalteinrichtung verbunden, sodass die gesamte Getriebehydraulik, die zur Antriebsdrehmomentübertragung dient, deaktiviert wird. Umfasst der Hydraulikkreis weiterhin einen Teilkreis, der zum Kühlen des Doppelkupplungsgetriebes dient, kann dieser weiter betrieben werden, wobei dann eine verringerte Leistung sowohl im Bezug auf das Kühlen als auch auf das Fördern des Hydraulikmediums erforderlich ist.

Gemäß einer vorteilhaften Weiterbildung der Erfindung ist vorgesehen, dass die Schalteinrichtung wenigstens ein erstes Schaltventil aufweist, das an einem ersten Anschluss mit dem Druckregelventil, an einem zweiten Anschluss mit der Druckquelle und an einem dritten Anschluss mit dem Tank verbunden ist. Vorzugsweise ist das Schaltventil als 3/2-Wege-Schaltventil ausgebildet, sodass es zwei Extremalstellungen beziehungsweise -zustände einnehmen kann. Vorzugsweise verbindet es in einem ersten Extremalzustand die Parksperre und das entsprechende Druckregelventil mit dem Tank, sodass beide drucklos geschaltet werden, und in einem zweiten Extremalzustand mit der Druckquelle, sodass die Parksperre ausgelegt und das Druckregelventil mit druckbeaufschlagtem Hydraulikmedium versorgt wird.

Vorzugsweise ist der erste Anschluss des ersten Schaltventils außerdem mit der Parksperre verbunden. Dazu kann der erste Anschluss zwei Ausgänge aufweisen oder in eine gemeinsame Versorgungsleitung münden, die sowohl zu der Parksperre als auch zu dem entsprechenden Druckregler führt.

Alternativ ist vorgesehen, dass die Schalteinrichtung ein zweites Schaltventil aufweist, das mit der Druckquelle, dem Tank und der Parksperre verbunden ist, wobei das zweite Schaltventil als Pilotventil wirkend dem ersten Schaltventil zugeordnet ist. Die Schalteinrichtung erfasst gemäß dieser Ausführungsform also zwei Schaltventile, wobei eines direkt zwischen Druckquelle und Druckregelventil geschaltet ist, und das andere, zweite Schaltventil als Pilotventil wirkt. Das zweite Schaltventil ist somit direkt allein zur Betätigung der Parksperre vorgesehen. Dadurch, dass das zweite Schaltventil dem ersten Schaltventil als Pilotventil vorgeschaltet ist, wird durch die Betätigung des zweiten Schaltventils auch das erste Schaltventil betätigt, welches wiederum mit dem entsprechenden Druckregelventil verbunden ist, sodass durch Betätigung des zweiten Schaltventils, beispielsweise zum Auslegen der Parksperre, gleichzeitig das erste Schaltventil zum Versorgen des entsprechenden Druckregelventils mit Hydraulikmedium geschaltet wird. Hierdurch wird erreicht, dass ein elektrischer Aktor zum Ansteuern des ersten Schaltventils entfallen kann. Darüber hinaus wird erreicht, dass hierdurch beide Ventile, also das Schaltventil und das Druckregelventil, für ihre jeweilige Aufgabe optimiert ausgebildet werden können. Bevorzugt ist auch das zweite Schaltventil als 3/2-Wege-Schaltventil ausgebildet. Ebenso ist es denkbar, dass zumindest eines der Schaltventile als Proportionalventil ausgebildet ist.

Besonders bevorzugt ist vorgesehen, dass zumindest das mit der Parksperre verbundene Schaltventil, also das erste Schaltventil oder das zweite Schaltventil, je nach dem, welches von beiden mit der Parksperre verbunden ist, eine Rückstellfeder aufweist, die das Schaltventil in seinen ersten Extremalzustand drängt, in welcher die Parksperre zu ihrer Drucklosschaltung mit dem Tank verbunden ist. Die Rückstellfeder dient somit zum Verbringen des Schaltventils in eine Sicherheitsposition, in welcher beispielsweise bei Ausfall eines Betätigungsstroms die Parksperre nicht ausgelegt werden kann, beziehungsweise einlegbar ist. Vorzugsweise weist die Parksperre einen hydraulischen Betätigungsaktor auf, der mit dem entsprechenden Schaltventil verbunden ist, sowie eine elektromagnetisch betätigbare Sperrmechanik, die die Parksperre in ihrem ausgelegten Zustand vorzugsweise formschlüssig hält. Ob die Parksperre bei Wegfall des Hydraulikdrucks tatsächlich eingelegt wird, hängt dann davon ab, ob die Sperrmechanik die Parksperre freigibt, wobei die Parksperre zweckmäßigerweise entgegen eines Rückstelldrucks, der vorzugsweise durch ein mechanisches Federelement erzeugt wird, in die eingelegte Stellung gedrängt wird.

Erfindungsgemäß ist vorgesehen, dass das mindestens eine zweite Druckregelventil direkt mit der Druckquelle verbunden ist. Hierbei ist also vorgesehen, dass die Gangsteller unabhängig von der Betätigung der Parksperre weiterhin mit Hydraulikmedium versorgt werden, indem das zweite Druckregelventil direkt mit der Druckquelle verbunden ist. Dazu ist das zweite Druckregelventil beispielsweise mit dem Anschluss des Schaltventils verbunden, an welchem auch die Druckquelle angeschlossen ist. Alternativ kann von einer entsprechenden Druckleitung der Druckquelle eine Leitung abzweigen, die zu dem Schaltventil beziehungsweise der Schalteinrichtung führt, und eine andere Druckleitung, die zu dem zweiten Druckregelventil führt. Unter einer Druckquelle ist vorliegend bevorzugt mindestens eine Pumpe zu verstehen, die besonders bevorzugt elektromotorisch angetrieben wird, sodass die Pumpleistung unabhängig von der Drehzahl einer mit Kupplungsgetriebe wirkverbindbaren Brennkraftmaschine ist. Sind beide erste Druckregelventile, die den Kupplungen zugeordnet sind, mit der Schalteinrichtung beziehungsweise dem Schaltventil verbunden, so werden bei Betätigung der Parkbremse bevorzugt zumindest die Kupplungen drucklos geschaltet, sodass eine Kraftübertragung von der Brennkraftmaschine auf das Getriebe verhindert wird, in dem Getriebe jedoch Gangstellvorgänge durchgeführt werden können.

Besonders bevorzugt weist zumindest das mit der Parksperre verbundene (erste oder zweite) Schaltventil zusätzlich oder alternativ zu der Rückstellfeder wenigstens eine Ventilfläche auf, die zur Druckregelung mit der Druckquelle verbunden ist. Dabei ist das entsprechende Schaltventil derart ausgebildet, dass, wenn der Druck der Druckquelle einen bestimmten Wert überschreitet, das Schaltventil in seinen Extremalzustand verlagert wird, in welcher die Parksperre mit dem Tank verbunden ist. Hierdurch kann beispielsweise die Parksperre vor zu hohen Drücken geschützt werden.

Weiterhin ist bevorzugt vorgesehen, dass die Druckquelle wenigstens eine elektromotorisch antreibbare/angetriebene Pumpe und/oder wenigstens einen hydraulischen Druckspeicher umfasst. Die Druckquelle, insbesondere die Pumpe und/oder der Druckspeicher sind vorzugsweise über eine Versorgungsleitung beziehungsweise Druckleitung, wie oben bereits beschrieben, mit der Schalteinrichtung und insbesondere mit dem ersten und/oder dem zweiten Schaltventil der Schalteinrichtung verbunden.

Gemäß einer vorteilhaften Weiterbildung der Erfindung ist vorgesehen, dass zumindest das mit der Parksperre verbundene Schaltventil die Druckquelle, insbesondere den Druckspeicher, mit dem Tank verbindet, wenn auch die Parksperre mit dem Tank verbunden ist. Dadurch wird erreicht, dass bei Einlegen der Parksperre der Druckspeicher entleert wird, und kein ungewolltes Auslegen der Parksperre erfolgen kann.

Im Folgenden soll die Erfindung anhand der Zeichnung näher erläutert werden. Dazu zeigen
- Figur 1: einen nicht beanspruchten Hydraulikkreis in einer schematischen Darstellung,
- Figur 2: eine nicht beanspruchte Weiterbildung des Hydraulikkreises,
- Figur 3: eine beanspruchte vorteilhafte Variante des weitergebildeten Hydraulikkreises,
- Figur 4: eine Schalteinrichtung des Hydraulikkreises zum Betätigen der Parkbremse gemäß einem beanspruchten Ausführungsbeispiel,
- Figur 5: eine nicht beanspruchte alternative, vorteilhafte Weiterbildung des Hydraulikkreises und
- Figur 6: eine beanspruchte vorteilhafte Variante der alternativen Ausbildung des Hydraulikkreises.

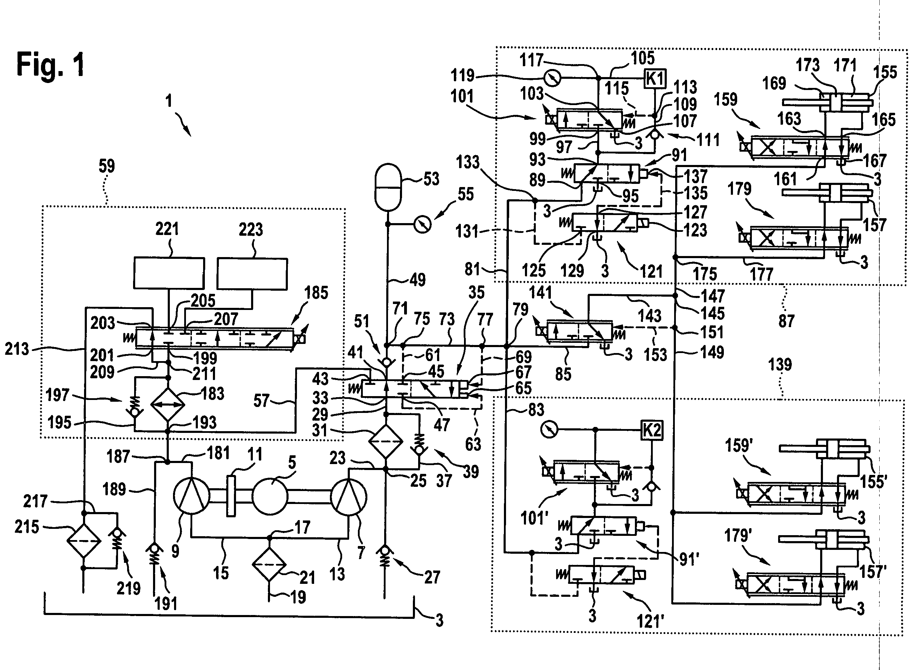

Figur 1 zeigt einen nicht beanspruchten Hydraulikkreis 1, der der Betätigung, insbesondere dem Kuppeln sowie dem Ein- und Auslegen von Gängen, eines Doppelkupplungsgetriebes sowie dessen Kühlung dient. Der Hydraulikkreis 1 umfasst einen Tank 3, der insbesondere als Vorratsbehälter oder Sumpf für ein zur Betätigung und Kühlung verwendetes Hydraulikmedium dient, und in dem das Hydraulikmedium vorzugsweise drucklos gespeichert ist. Es ist ein Elektromotor 5 vorgesehen, der eine erste Pumpe 7 und eine zweite Pumpe 9 antreibt. Der Elektromotor 5 ist bevorzugt bezüglich seiner Drehzahl und Drehrichtung steuerbar, besonders bevorzugt regelbar. Die erste Pumpe 7 ist mit dem Elektromotor 5 fest verbunden, also ohne dass ein Trennelement vorgesehen ist. Dies bedeutet, dass die Pumpe 7 bei laufendem Elektromotor 5 stets angetrieben wird und Hydraulikmedium vorzugsweise in beiden Drehrichtungen gleichgerichtet fördert. Die Pumpe 9 ist bevorzugt über ein Trennelement 11 mit dem Elektromotor 5 verbunden. Es ist also möglich, die Pumpe 9 von dem Elektromotor 5 abzukoppeln, sodass sie nicht läuft, wenn der Elektromotor 5 läuft. Das Trennelement 11 ist vorzugsweise als Kupplung oder als Freilauf ausgebildet, wobei im zweiten Fall über die Drehrichtung des Elektromotors 5 bestimmt werden kann, ob von der Pumpe 9 Hydraulikmedium gefördert wird oder nicht.

Die erste Pumpe 7 und die zweite Pumpe 9 sind jeweils über eine Leitung 13, 15 mit einer Abzweigung 17 verbunden, in die eine weitere Leitung 19 mündet. Diese verbindet den Tank 3 über einen Saugfilter 21 mit der Abzweigung 17. Insgesamt sind damit Einlässe der Pumpen 7, 9 über die Leitungen 13, 15, die Abzweigung 17 und die den Saugfilter 21 aufweisende Leitung 19 mit dem Tank 3 verbunden.

Der Auslass der ersten Pumpe 7 ist mit einer Leitung 23 verbunden, die zu einer Abzweigung 25 führt. Die Abzweigung 25 ist über ein Druckbegrenzungsventil 27 mit dem Tank 3 verbunden. Das Druckbegrenzungsventil 27 kann bei Überdruck in Richtung des Tanks 3 öffnen. Außerdem geht von der Abzweigung 25 eine Leitung 29 aus, die über einen Druckfilter 31 zu einem Anschluss 33 eines Schaltventils 35 führt.

Der Druckfilter 31 ist durch einen Bypass 37 überbrückbar, wobei in dem Bypass 37 ein Differenzdruckventil 39 angeordnet ist, welches bei Überdruck eine Überbrückung des Filters 31 in Richtung auf den Anschluss 33 ermöglicht. Ein Öffnen des Differenzdruckventils 39 erfolgt ab einem vorgegebenen Differenzdruck über den Druckfilter 31.

Das Schaltventil 35 ist als 5/2-Wegeventil ausgebildet, welches außer dem Anschluss 33 vier weitere Anschlüsse 41, 43, 45, 47 aufweist. In einem ersten, in Figur 1 dargestellten Schaltzustand des Schaltventils 35 ist der Anschluss 33 mit dem Anschluss 41 verbunden, während die weiteren Anschlüsse 43, 45 und 47 blind, also geschlossen, geschaltet sind. Der Anschluss 41 mündet in eine Leitung 49, in der ein Rückschlagventil 51 angeordnet ist. Die Leitung 49 führt zu einem Druckspeicher 53, wobei vor dem Druckspeicher 53 eine Druckerfassungseinrichtung 55 mit der Leitung 49 hydraulisch verbunden ist.

In einem zweiten, aus der Figur 1 entnehmbaren Schaltzustand des Schaltventils 35 ist der Anschluss 33 mit dem Anschluss 43 verbunden, der in eine Leitung 57 mündet, die zu einem Hydraulikteilkreis 59 führt, der insbesondere der Kühlung von Kupplungen des Doppelkupplungsgetriebes dient. In diesem zweiten Schaltzustand ist der Anschluss 41 blind geschaltet und der Anschluss 45 ist mit dem Anschluss 47 verbunden. Dabei mündet in den Anschluss 45 eine Leitung 61, die mit dem Druck des Hydraulikmediums im Druckspeicher 53 beaufschlagt ist. Der Anschluss 47 mündet in eine Leitung 63, die mit einer ersten Ventilfläche 65 des Schaltventils 35 hydraulisch verbunden ist. Eine zweite Ventilfläche 67 des Schaltventils 35 ist über eine Leitung 69 permanent mit dem Druck des Druckspeichers 53 beaufschlagt.

Von der Leitung 49 zweigt an einer Abzweigung 71 eine Leitung 73 ab, von der wiederum in einer Abzweigung 75 die Leitung 61 und in einer Abzweigung 77 die Leitung 69 abzweigt. Die Abzweigung 71 ist auf der dem Schaltventil 35 abgewandten Seite des Rückschlagventils 51 an diesem angeschlossen.

Die Leitung 73 mündet in einer Abzweigung 79, von der Leitungen 81, 83 und 85 ausgehen.

Die Leitung 81 führt in einen Teilgetriebekreis 87 zur Versorgung eines ersten Teilgetriebes. Das erste Teilgetriebe weist eine Kupplung K1 auf. Die Leitung 81 mündet in einen Anschluss 89 eines Schaltventils 91, das als 3/2-Wegeventil ausgebildet ist, und als Sicherheitsventil für die Kupplung K1 dient. In einem ersten, dargestellten Schaltzustand des Schaltventils 91 ist der Anschluss 89 mit einem Anschluss 93 hydraulisch verbunden, während ein Anschluss 95 des Schaltventils 91 blind geschaltet ist. In einem zweiten, der Figur 1 entnehmbaren Schaltzustand des Schaltventils 91 ist der Anschluss 93 mit dem Anschluss 95 und über diesen mit dem Tank 3 verbunden, während der Anschluss 89 blind geschaltet ist. Wie im Folgenden deutlich wird, wird in diesem zweiten Schaltzustand die Kupplung K1 drucklos geschaltet.

Der Anschluss 93 ist mit einer Leitung 97 und über diese mit einem Anschluss 99 eines Druckregelventils 101 verbunden. Das Druckregelventil 101 ist als 3/2-Wege-Proportionalventil ausgebildet, das einen Anschluss 103 aufweist, der über eine Leitung 105 mit der Kupplung K1 verbunden ist. Das Druckregelventil 101 weist ferner einen Anschluss 107 auf, der mit dem Tank 3 verbunden ist. In einem ersten Extremalzustand des Druckregelventils 101 ist der Anschluss 99 mit dem Anschluss 103 verbunden, während der Anschluss 107 blind geschaltet ist. In diesem Fall wirkt der volle, in der Leitung 97 herrschende Druck des Hydraulikmediums auf die Kupplung K1. In einem zweiten Extremalzustand ist der Anschluss 103 mit dem Anschluss 107 verbunden, sodass die Kupplung K1 drucklos ist. Durch proportionale Variation zwischen diesen Extremalzuständen regelt das Druckregelventil 101 in an sich bekannter Weise den in der Kupplung K1 herrschenden Druck. Von der Kupplung K1 führt eine Leitung 109 über ein Rückschlagventil 111 zurück zur Leitung 97. Falls der Druck in der Kupplung K1 über den Druck in der Leitung 97 steigt, öffnet das Rückschlagventil 111, wodurch eine hydraulische Verbindung zwischen der Kupplung K1 über die Leitung 109 mit der Leitung 97 freigegeben wird. Von der Leitung 109 zweigt in einer Abzweigung 113 eine Leitung 115 ab, die den Druck in der Kupplung K1 als Regelgröße an das Druckregelventil 101 zurückgibt.

In der Leitung 105 ist eine Abzweigung 117 vorgesehen, durch die eine Druckerfassungseinrichtung 119 hydraulisch wirkverbunden ist. Auf diese Weise wird der in der Kupplung K1 herrschende Druck durch die Druckerfassungseinrichtung 119 erfasst.

Das Schaltventil 91 wird von einem Pilotventil 121 angesteuert. Dieses wird durch einen elektrischen Aktor 123 betätigt. Es ist als 3/2-Wegeventil ausgebildet und umfasst die Anschlüsse 125, 127 und 129. Der Anschluss 125 ist über eine Leitung 131 mit einer in der Leitung 81 vorgesehenen Abzweigung 133 verbunden. Der Anschluss 127 ist über eine Leitung 135 mit einer Ventilfläche 137 des Schaltventils 91 verbunden. In einem ersten, hier dargestellten Schaltzustand des Pilotventils 121 ist der Anschluss 125 blind geschaltet, während der Anschluss 127 mit dem Anschluss 129 und über diesen mit dem Tank 3 verbunden ist, wodurch die Ventilfläche 137 des Schaltventils 91 über die Leitung 135 drucklos geschaltet ist. Vorzugsweise nimmt das Pilotventil 121 diesen Schaltzustand ein, wenn kein elektrisches Steuersignal an dem Aktor 123 anliegt. In einem zweiten einnehmbaren Schaltzustand des Pilotventils 121 ist der Anschluss 125 mit dem Anschluss 127 verbunden, während der Anschluss 129 blind geschaltet ist. In diesem Fall wirkt der in der Leitung 81 herrschende Druck über die Abzweigung 133, die Leitung 131 und die Leitung 135 auf die Ventilfläche 137 des Schaltventils 91, wodurch dieses entgegen einer Vorspannkraft in seinen zweiten Schaltzustand geschaltet wird, in dem der Anschluss 93 mit dem Anschluss 95 hydraulisch verbunden ist, sodass die Kupplung K1 drucklos geschaltet wird. Vorzugsweise kann also durch elektrische Ansteuerung des Pilotventils 121 das Schaltventil 91 so betätigt werden, dass die Kupplung K1 drucklos geschaltet und damit geöffnet ist.

Die von der Abzweigung 79 ausgehende Leitung 83 dient der Versorgung einer Kupplung K2 eines Teilhydraulikkreises 139 eines zweiten Teilgetriebes. Die Ansteuerung der Kupplung K2 umfasst ebenfalls ein Schaltventil 91', ein Pilotventil 121' und ein Druckregelventil 101'. Die Funktionsweise ist die gleiche, die bereits in Zusammenhang mit der ersten Kupplung K1 beschrieben wurde. Aus diesem Grund wird auf die entsprechende Beschreibung zum Teilgetriebekreis 87 verwiesen. Die hydraulische Ansteuerung der Kupplung K2 entspricht derjenigen der Kupplung K1.

Die von der Abzweigung 79 ausgehende Leitung 85 ist mit einem Druckregelventil 141 verbunden, über das der Druck des Hydraulikmediums in einer Leitung 143 regelbar ist. Die Funktionsweise des Druckregelventils 141 entspricht vorzugsweise der Funktionsweise der Druckregelventile 101, 101', sodass hier eine erneute Beschreibung nicht notwendig ist. Die Leitung 143 ist mit einer Abzweigung 145 verbunden, von der eine Leitung 147 und eine Leitung 149 ausgehen. In der Leitung 149 ist eine Abzweigung 151 vorgesehen, von der eine Leitung 153 ausgeht, über die der in der Leitung 149 und damit der in der Leitung 143 herrschende Druck als Regelgröße an das Druckregelventil 141 zurückgegeben wird. Es ist offensichtlich, dass die Abzweigung 151 auch in den Leitungen 151 oder 147 vorgesehen sein kann.

Die Leitung 147 dient der Versorgung von Gangstellern 155 und 157 in dem Teilgetriebekreis 87, die als zwei doppelt wirkende Zylinder, also Gleichlaufzylinder, ausgebildet sind.

Zur hydraulischen Ansteuerung des Gangstellers 155 ist ein Volumensteuerventil 159 vorgesehen, das als 4/3-Wege-Proportionalventil ausgebildet ist. Es weist vier Anschlüsse 161, 163, 165 und 167 auf. Der erste Anschluss 161 ist mit der Leitung 147 verbunden, der zweite Anschluss 163 ist mit einer ersten Kammer 169 des Gangstellers 155 verbunden, der dritte Anschluss 165 ist mit einer zweiten Kammer 171 des Gangstellers 155 verbunden und der vierte Anschluss 167 ist mit dem Tank 3 verbunden. In einem ersten Extremalzustand des Volumensteuerventils 159 ist der erste Anschluss 161 mit dem zweiten Anschluss 163 verbunden, während der dritte Anschluss 165 mit dem vierten Anschluss 167 verbunden ist. In diesem Fall kann Hydraulikmedium von der Leitung 147 in die erste Kammer 169 des Gangstellers 155 fließen, während die zweite Kammer 171 über die Anschlüsse 165, 167 zum Tank 3 hin drucklos geschaltet ist. Auf diese Weise wird ein Kolben 173 des Gangstellers 155 in eine erste Richtung bewegt, um beispielsweise einen bestimmten Gang des Doppelkupplungsgetriebes aus- beziehungsweise einen anderen bestimmten Gang einzulegen.

In einem zweiten Extremalzustand des Volumensteuerventils 159 werden sowohl der Anschluss 163 als auch der Anschluss 165 mit dem Anschluss 167 verbunden, wobei der Anschluss 161 blind geschaltet wird. Auf diese Weise sind beide Kammern 169, 171 des Gangstellers 155 mit dem Tank 3 verbunden, sodass sie drucklos geschaltet sind. Der Kolben 173 des Gangstellers 155 verharrt dann in seiner momentanen Position, weil keine Kräfte auf ihn wirken.

In einem dritten Extremalzustand des Volumensteuerventils 159 ist der Anschluss 161 mit dem Anschluss 165 verbunden und der Anschluss 163 mit dem Anschluss 167. In diesem Fall fließt Hydraulikmedium von der Leitung 147 in die zweite Kammer 171 des Gangstellers 155 und die erste Kammer 169 wird über den Anschluss 163 und den Anschluss 167 zum Tank 3 hin drucklos geschaltet. Das Hydraulikmedium übt dann eine Kraft auf den Kolben 173 des Gangstellers 155 derart aus, dass er in eine zur ersten Richtung entgegengesetzte zweite Richtung verlagert wird. Auf diese Weise kann der zuvor erwähnte bestimmte andere Gang aus- beziehungsweise der erwähnte bestimmte Gang eingelegt werden.

Wie bereits beschrieben, ist das Volumensteuerventil 159 als Proportionalventil ausgebildet. Der von der Leitung 147 kommende Hydraulikmedienstrom wird durch Variation der Ventilzustände zwischen den drei Extremalzuständen auf die Kammern 169, 171 aufgeteilt, sodass es möglich ist, durch Steuerung/Regelung des Volumenstroms eine definierte Geschwindigkeit für den Ein- beziehungsweise Auslegevorgang eines Gangs vorzugeben.

Von der Leitung 147 zweigt in einer Abzweigung 175 eine Leitung 177 ab, die in ein Volumensteuerventil 179 mündet, welches der Ansteuerung des Gangstellers 157 dient. Die Funktionsweise der hydraulischen Ansteuerung des Gangstellzylinders 157 ist die gleiche, die in Zusammenhang mit dem Gangsteller 155 beschrieben wurde. Eine erneute Beschreibung ist daher nicht notwendig.

Die Leitung 149 dient der Versorgung von Gangsstellern 155' und 157' des zweiten Teilgetriebes im Teilgetriebekreis 139. Auch zu deren Ansteuerung sind Volumensteuerventile 159' und 179' vorgesehen. Die Teilgetriebekreise 87 und 139 sind bezüglich der Ansteuerung der Gangssteller 155, 155' beziehungsweise 157, 157' identisch ausgebildet, sodass auf die vorangegangene Beschreibung verwiesen wird.

Der Auslass der Pumpe 9 ist mit einer Leitung 181 verbunden, die zu dem Hydraulikteilkreis 59 führt, welcher vorzugsweise insbesondere der Kühlung der Kupplungen K1, K2 dient. Die Leitung 181 führt über einen Kühler 183 zu einem Volumensteuerventil 185. Hinter dem Auslass der Pumpe 9 und vor dem Kühler 183 ist eine Abzweigung 187 in der Leitung 181 vorgesehen, von der eine Leitung 189 abzweigt, die über ein in Richtung auf den Tank 3 öffnendes Druckbegrenzungsventil 191 zum Tank 3 führt. Hinter der Abzweigung 187 und vor dem Kühler 183 ist eine Abzweigung 193 vorgesehen, in die die Leitung 57 mündet, die von dem Schaltventil 35 kommt und mit dessen Anschluss 43 verbunden ist. Über die Leitung 57 ist es möglich, den Hydraulikteilkreis 59 mit von der Pumpe 7 gefördertem Hydraulikmedium zu versorgen, wenn sich das Schaltventil 35 in seinem zweiten Schaltzustand befindet. Außerdem zweigt von der Abzweigung 193 ein Bypass 195 ab, der ein Differenzdruckventil 197 aufweist und zum Kühler 183 parallel liegt. Das Differenzdruckventil 197 gibt bei Überdruck den Bypass in Richtung auf das Volumensteuerventil 185 frei. Auf diese Weise kann der Kühler 183 überbrückt werden.

Das Volumensteuerventil 185 ist als 4/3-Wege-Proportionalventil ausgebildet, das Anschlüsse 199, 201, 203, 205 und 207 aufweist. Der Anschluss 199 ist mit der Leitung 181 über den Kühler 183 beziehungsweise das Differenzdruckventil 197 verbunden, ebenso wie der Anschluss 201, der über eine Leitung 209 und eine Abzweigung 211 mit der Leitung 181 verbunden ist. Die Anschlüsse 199 und 201 bilden also, da sie beide mit der Leitung 181 stromabwärts des Kühlers 183 verbunden sind, einen gemeinsamen Anschluss des Volumensteuerventils 185. Nur aus Übersichtlichkeitsgründen sind zwei Anschlüsse 199, 201 gezeichnet, tatsächlich ist jedoch nur ein Anschluss, beispielsweise 199 oder 201, für die Leitung 181 an dem Volumensteuerventil 185 vorgesehen, wobei gemäß einem alternativen Ausführungsbeispiel das Volumensteuerventil 185 auch tatsächlich mit den zwei getrennten Anschlüssen 199, 201 als 5/3-Wege-Proportionalventil ausgebildet sein kann. Zum besseren Verständnis beziehen sich die folgenden Ausführungen auf die dargestellte Ausbildung, wobei zu berücksichtigen ist, dass es sich bei den Anschlüssen 199 und 201 eigentlich nur um einen Anschluss handelt, der entsprechend geschaltet wird. Der Anschluss 203 ist mit einer Leitung 213 verbunden, die über einen Druckfilter 215 zum Tank 3 führt. Der Druckfilter 215 ist durch einen Bypass 217 mit in Richtung auf den Tank 3 öffnendem Differenzdruckventil 219 überbrückbar.

Der Anschluss 205 des Volumensteuerventils 185 ist mit einer Kühlung 221 insbesondere für die erste Kupplung K1 verbunden. Der Anschluss 207 ist mit einer zweiten Kühlung 223 insbesondere für die zweite Kupplung K2 verbunden.

In einem ersten, in der Figur 1 dargestellten Extremalzustand des Volumensteuerventils 185 ist der Anschluss 201 mit dem Anschluss 203 verbunden, während die Anschlüsse 199, 205 und 207 blind geschaltet sind. Der gesamte in der Hydraulikleitung 181 beziehungsweise durch den Kühler 183 strömende Hydraulikmedienstrom wird also über die Anschlüsse 201, 203 in die Leitung 213 und damit über den Druckfilter 215 in den Tank 3 geleitet.

In einem zweiten Extremalzustand sind die Anschlüsse 199 und 205 miteinander verbunden, während die Anschlüsse 201, 203 und 207 blind geschaltet sind. In diesem Zustand wird der gesamte am Volumensteuerventil 185 ankommende Hydraulikmedienstrom der ersten Kühlung 221 zugeführt.

In einem dritten Extremalzustand des Volumensteuerventils 185 sind die Anschlüsse 199 und 207 miteinander verbunden. Die Anschlüsse 201, 203 und 205 sind blind geschaltet. In diesem Zustand wird demnach der gesamte in der Leitung 181 fließende Hydraulikmedienstrom der zweiten Kühlung 223 zugeführt.

Wie bereits ausgeführt, ist das Volumensteuerventil 185 als Proportionalventil ausgebildet, sodass Zwischenzustände zwischen den beschriebenen Extremalzuständen eingestellt werden können, wodurch der Volumenstrom zu den Kühlungen 221, 223 beziehungsweise zum Druckfilter 215 regelbar ist. Es ist auch möglich, das Volumensteuerventil 185 getaktet zu betreiben, wobei jeweils kurzzeitig mindestens einer der drei Extremalzustände angenommen wird. Auch bei dieser Betriebsart wird im Zeitmittel der Volumenstrom gesteuert oder geregelt, der den Kühlungen 221, 223 beziehungsweise dem Druckfilter 215 und damit dem Tank 3 zugeleitet wird.

Die Figur 1 zeigt, dass zusätzlich zum in der Leitung 181 vorhandenen Hydraulikmediumstrom ein Hydraulikmediumstrom der Leitung 57 treten und dem Hydraulikteilkreis 59 zugeführt werden kann. Alternativ ist es auch möglich, dass nur die Leitung 57 Hydraulikmedium einspeist. Zu erwähnen ist noch, dass die Proportionalventile 101, 101', 141, 159, 159', 179, 179', 185 jeweils insbesondere gegen Federkraft elektrisch proportional verstellbar sind.

Wie oben bereits ausgeführt, mündet die Leitung 57 in den Hydraulikteilkreis 59, genauer gesagt in die Leitung 181 stromabwärts der Pumpe 9. Gemäß einer alternativen, hier nicht dargestellten Ausführungsform mündet die Leitung 57 in die Leitung 181 bevorzugt stromabwärts des Kühlers 183. Durch die Zuführung des Hydraulikmediums aus dem Hochdruckkreis in den Hydraulikteilkreis 59 gemäß der alternativen Ausführungsform wird der Gesamtvolumenstrom durch den Kühler 183 reduziert. Durch den reduzierten Volumenstrom wird der Druckabfall über den Kühler 183 reduziert, wodurch die notwendige Antriebsenergie für die Pumpen 7 und/oder 9 verringert wird. Durch eine Reduktion der Rückstaudrücke wird also die für den Elektromotor 5 benötigte Antriebsenergie reduziert. Bei einer ausreichend hohen Reduktion der Rückstaudrücke beziehungsweise des Druckniveaus - unabhängig davon, wie die Reduktion erreicht wird - ist gemäß einer weiteren Ausführungsform vorgesehen, die Pumpe 9 mit dem Elektromotor 5 direkt zu verbinden, die dargestellte Trennkupplung 11 also zu entfernen.

Gemäß einer weiteren, hier nicht dargestellten Ausführungsform bezüglich der Anordnung des Druckfilters 215 ist vorgesehen, dass dieser nicht zwischen Volumensteuerventil 185 und Tank 3 in der Leitung 213, sondern vorzugsweise in der Leitung 181, insbesondere zwischen dem Kühler 183 und dem Volumensteuerventil 185, angeordnet ist. Vorzugsweise mündet dabei die Leitung 57 stromabwärts des Druckfilters 215 in die Leitung 181. Durch die alternative Anordnung des Druckfilters 215, der nunmehr im Hauptstrom des Hydraulikmediums liegt, werden die Zeitanteile erhöht, innerhalb derer das Hydraulikmedium durch den Druckfilter 215 gefiltert wird. Das Bypass-Ventil 219 wird dabei vorzugsweise auf einen minimalen Rückstaudruck über den Volumenstrom ausgelegt.

Alternativ zu der dargestellten und beschriebenen Ausführungsform des Volumensteuerventils 185 ist gemäß einer weiteren Ausführungsform vorgesehen, dass die Schaltstellungen vorzugsweise derart vertauscht sind, dass in dem ersten Extremalzustand die Anschlüsse 199 und/oder 201 mit dem Anschluss 205 oder 207 verbunden und die übrigen Anschlüsse des Volumensteuerventils 185 blind geschaltet sind, in dem zweiten Extremalzustand die Anschlüsse 201 und/oder 199 mit dem Anschluss 203 verbunden und die übrigen Anschlüsse blind geschaltet sind, und in dem dritten Extremalzustand die Anschlüsse 199 und/oder 201 mit dem Anschluss 207 oder 205 verbunden und die übrigen Anschlüsse blind geschaltet sind. Durch ein derartiges Vertauschen der Schaltstellungen wird vermieden, dass bei einem getakteten Ansteuern des Volumensteuerventils 185 zum Einstellen eines gewünschten Hydraulikmediumstroms für eine der Kupplungen K1 oder K2 ein Volumenstrom auch zur anderen Kupplung K2 beziehungsweise K1 fließt. Stattdessen wird der beim getakteten, nicht zur jeweiligen Kupplung K1 oder K2 geführte Volumenstrom in den Tank 3 geleitet. Bei der tatsächlichen Ausbildung des Volumensteuerventils 185 als 4/3-Wege-Proportionalventil sind die Anschlüsse 199 und 201 stets als gemeinsamer beziehungsweise einziger Anschluss der Leitung 181 an dem Volumensteuerventil 185 zu verstehen, so dass tatsächlich nur einer der beiden Anschlüsse 199, 201 an dem Volumensteuerventil 185 vorgesehen ist.

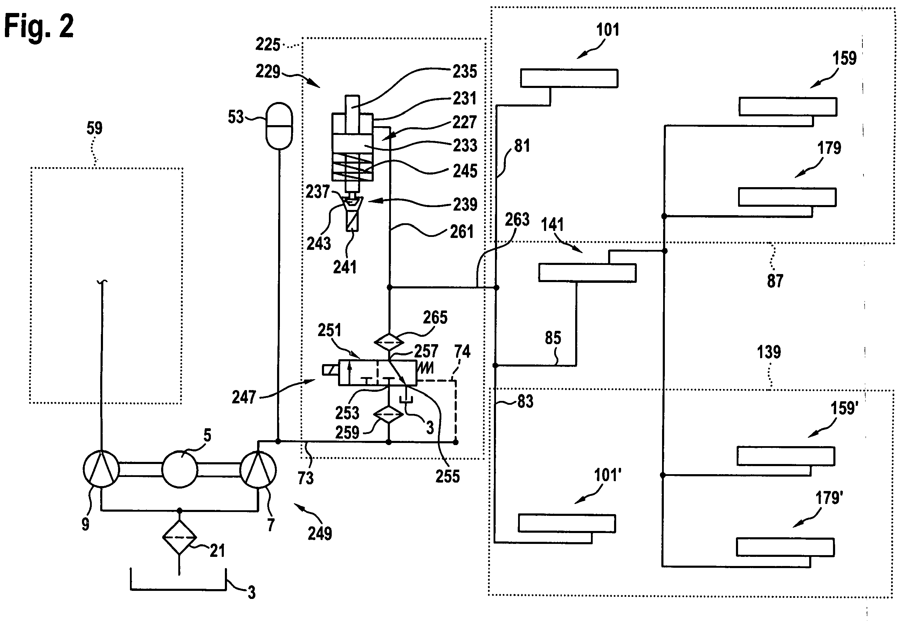

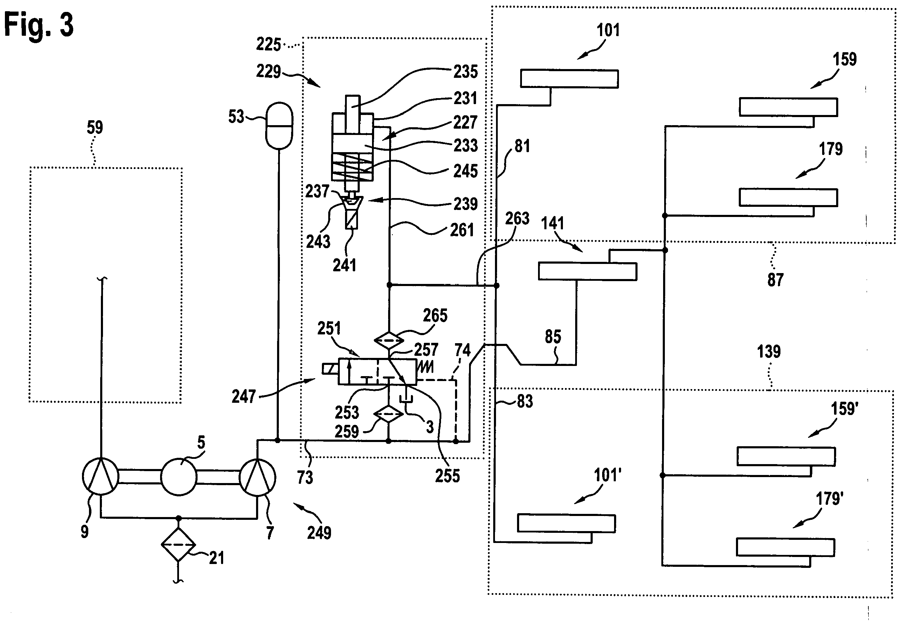

Figuren 2 und 3 zeigen den nicht beanspruchten bzw. beanspruchten Hydraulikkreis 1 gemäß einer bevorzugten Weiterbildung abschnittsweise in einer vereinfachten Darstellung. Aus Figur 1 bekannte Elemente sind in den folgenden Figuren mit den gleichen Bezugszeichen versehen, sodass insofern auf die oben stehende Beschreibung verwiesen wird.

Ein wesentlicher Unterschied zu dem vorhergehenden Ausführungsbeispiel liegt darin, dass der Hydraulikkreis 1 nunmehr einen Hydraulikteilkreis 225 umfasst, der im Wesentlichen zur Betätigung einer Parksperre 227 dient. Die Parksperre 227 umfasst einen hydraulisch betätigbaren Aktor 229, der einen in einem Zylinder 231 axial verlagerbar gehaltenen Kolben 233 umfasst, wobei der Kolben 233 einendig ein Parksperrelement 235 bildet, das in das Getriebe zum Einlegen der Parksperre einbringbar ist, und anderendig ein Halteelement 237, das einer Haltevorrichtung 239 zugeordnet ist. Die Haltevorrichtung 239 weist einen Elektromagneten 241 auf, der auf eine Sperrmechanik 243 wirkt. Die Sperrmechanik greift in einen Hinterschnitt des Halteelements 237, um den Kolben 233 entgegen der Druckkraft einer Rückstellfeder 245 in der ausgelegten beziehungsweise entriegelten Position zu halten. Durch Betätigung des Elektromagneten 241 wird die Sperrmechanik 243, die vorliegend bevorzugt als Greifarmpaar ausgebildet ist, geschlossen, wobei durch die erzeugte Magnetkraft das Greifarmpaar aufeinander zu bewegt beziehungsweise geschwenkt wird, um den Hinterschnitt des Halteelements 237 zu hintergreifen. Wird der Elektromagnet 241 stromlos geschaltet, wird das Greifarmpaar geöffnet, sodass das Halteelement 237 freigegeben und der Kolben 233 in Richtung des Halteelements 235 durch die Rückstellfeder 245 gedrängt beziehungsweise verlagert wird, um das Getriebe zu sperren. Alternativ ist es auch denkbar, die Haltevorrichtung 239 derart auszubilden, dass das Greifarmpaar durch Betätigung, also Strombeaufschlagung des Elektromagneten 241, geöffnet wird, während es bei stromlos geschaltetem Elektromagneten 241 in seiner Hintergriffsposition verharrt. Auf der der Rückstellfeder 245 gegenüberliegenden Seite ist eine Hydraulikkammer gebildet, die über eine Schalteinrichtung 247 mit der Druckquelle 249, bestehend aus dem Druckspeicher 53 sowie zumindest der Pumpe 7, verbunden ist.

In dem vorliegenden Ausführungsbeispiel ist die Schalteinrichtung 247 in die Leitung 73 eingeschaltet. Dabei weist die Schalteinrichtung 247 ein erstes Schaltventil 251 auf, das als 3/2-Wege-Schaltventil ausgebildet ist. Dazu weist es einen ersten Anschluss 253, einen zweiten Anschluss 255 und einen dritten Anschluss 257 auf. Der erste Anschluss 253 ist dabei über einen Druckfilter 259 mit der Druckleitung 73 verbunden. Der Anschluss 255 ist mit dem Tank 3 verbunden und der Anschluss 257 mit einer Leitung 261, die zu dem Aktor 229 beziehungsweise dessen Druckkammer führt. Von der Leitung 261 zweigt eine Leitung 263 ab, die in die Leitung 83 mündet, von welcher die Leitungen 81 und 85 abzweigen. Vor der Abzweigung in die Leitung 263 ist in der Leitung 261 stromabwärts des Schaltventils 251 ein weiterer Druckfilter 265 vorgesehen. Die Leitung 263 bildet dabei die Fortführung der Leitung 73 aus Figur 1.

Das Schaltventil 251 ist elektrisch, insbesondere elektromagnetisch betätigbar, wobei es elektrisch entgegen der Kraft einer Rückstellfeder und optional zusätzlich oder alternativ mittels einer Druckleitung 74, die von der Leitung 79 abzweigt, gegen den Druck in der Leitung 73 verlagerbar ist. Alternativ ist aber auch eine pneumatische oder hydraulische Betätigung des Schaltventils 251 denkbar. In der ersten dargestellten Extremalstellung beziehungsweise in dem ersten Extremalzustand verbindet das Schaltventil 251 den Anschluss 257 mit dem Anschluss 255, also den Aktor 229 mit dem Tank 3, sodass der Aktor 229 drucklos geschaltet ist. In diesem Zustand könnte der Kolben 233 in seine Sperrposition verlagert werden, sofern der Elektromagnet 241 zum Öffnen der Sperrmechanik 237 betätigt werden würde.

In seinem zweiten Extremalzustand verbindet das Schaltventil 251 den Anschluss 253 mit dem Anschluss 257, sodass das von der Druckquelle 249 kommende Hydraulikmedium dem Aktor 229 sowie den Druckregelventilen 101, 141 und 101' zugeführt wird. Wird das Schaltventil 251 also betätigt, wird ein Druck auf der der Rückstellfeder 245 gegenüberliegenden Seite des Kolbens 233 aufgebaut, welcher den Kolben 233 in Richtung der Haltevorrichtung 239 verlagert. Auf diese Art und Weise wird die zuvor eingelegte Parksperre 227 gelöst beziehungsweise ausgelegt. Durch eine kegelstumpfartige Ausbildung des das Halteelement 237 bildenden Endes des Kolbens 233, dringt dieses zwischen die Greifarme der Sperrmechanik 243, welche vorzugsweise durch Strombeaufschlagung des Elektromagneten 241 in Hintergriffsposition gelangt, um den Kolben 233 in der ausgelegten Stellung formschlüssig zu halten, auch wenn der Druck in der Druckkammer wegfällt.

Da gleichzeitig die Druckregelventile 101,101' und 141 mit der Druckquelle 249 verbunden werden, ist nunmehr ein Schalten und Kuppeln des Doppelkupplungsgetriebes möglich. Zum Einlegen der Parksperre 227 wird das Schaltventil 251 in seinen ersten Extremalzustand verbracht, sodass die Druckregelventile 101, 101' und 141 sowie der Aktor 229 drucklos geschaltet werden. Wird außerdem die Haltevorrichtung 239 entsprechend betätigt, wird die Parksperre eingelegt und so das Getriebe gesperrt, während ein Kuppeln und Schalten nicht mehr möglich ist.

Figur 3 zeigt eine beanspruchte vorteilhafte Weiterbildung der in Figur 2 dargestellten nicht beanspruchten Ausführungsform, wobei das Druckregelventil 141, das den Druckregelventilen 159, 179 und 159', 179' vorgeschaltet ist, durch die Leitung 85 direkt mit der Leitung 73 und somit direkt mit der Druckquelle 249 verbunden ist. Im Übrigen entspricht die Ausführungsform der zuvor beschriebenen. Hierdurch wird erreicht, dass, wenn die Parksperre 227 hydraulisch drucklos geschaltet ist, wie in Figur 3 dargestellt, das den Gangstellern 155, 155', 157, 157' vorgeschaltete Druckregelventil 141 weiterhin mit der Druckquelle 249 verbunden ist, sodass zwar ein Schalten, jedoch nicht ein Schließen einer der Kupplungen K1 oder K2 möglich ist. Somit wird gemäß dem vorliegenden Ausführungsbeispiel nur eine Teilfunktion beziehungsweise nur ein Hydraulikteilkreis, nämlich der die Kupplungen K1, K2 betreffende Hydraulikteilkreis, deaktiviert, wenn die Parksperre auslegbar beziehungsweise ausgelegt ist beziehungsweise wenn das Schaltventil 251 in seinen ersten Extremalzustand verlagert ist.

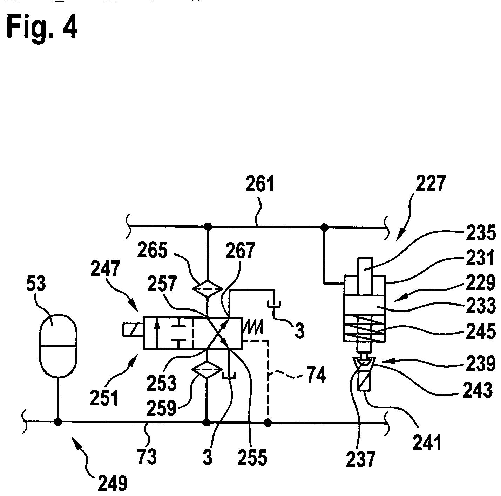

Figur 4 zeigt eine alternative Ausführungsform der Schalteinrichtung 247 in einer Detailansicht. Im Unterschied zu der in Figuren 2 und 3 dargestellten Schalteinrichtung weist hierbei das Schaltventil 251 einen weiteren Anschluss 267 auf, der mit dem Tank 3 verbunden ist. In dem ersten Extremalzustand, wie in Figur 4 dargestellt, verbindet das Schaltventil 251 somit auch die Druckleitung 73 mit dem Tank 3, was zur Folge hat, dass der Druckspeicher 53 geleert beziehungsweise entspannt wird. Hierdurch wird gewährleistet, dass auch im abgeschalteten Zustand kein ungewolltes Auslegen der Parksperre 227 erfolgen kann. So kann eine Fehlbetätigung des Schaltventils 251 nicht dazu führen, dass der Kolben 233 entgegen der Druckkraft der Rückstellfeder 245 verlagert wird. Im zweiten Extremalzustand sind die Anschlüsse 267 und 255 beide blind geschaltet. Entsprechend kann alternativ oder zusätzlich auch das zweite Schaltventil 269 mit einem weiteren Anschluss zum Tank 3 ausgebildet sein.

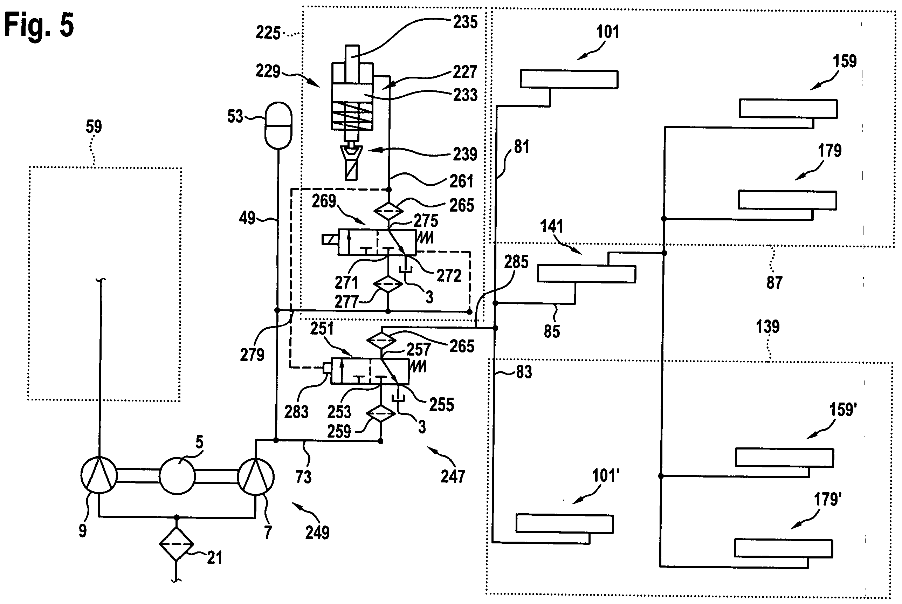

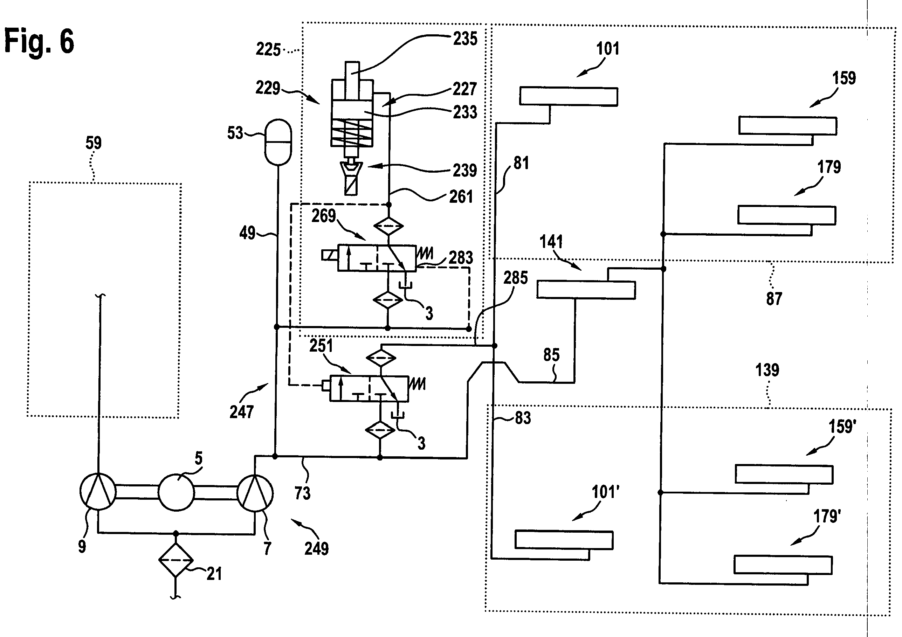

Figuren 5 und 6 zeigen ein nicht beanspruchtes bzw. beanspruchtes alternatives Ausführungsbeispiel, bei welchem die Schalteinrichtung 247 neben dem ersten Schaltventil 251 ein zweites Schaltventil 269 umfasst. Das zweite Schaltventil 269 ist vorzugsweise ebenfalls als 3/2-Wege-Schaltventil ausgebildet und weist dazu Anschlüsse 271, 273 und 275 auf, wobei der Anschluss 271 über einen Druckfilter 277 mit einer Leitung 279 verbunden ist, der Anschluss 272 mit dem Tank 3 und der Anschluss 275 mit der Leitung 261. Die Leitung 279 zweigt von der Leitung 49 ab und ist insofern parallel zu der Leitung 73 geschaltet. Das Schaltventil 269 ist vorzugsweise elektrisch betätigbar, kann aber auch pneumatisch oder hydraulisch betätigbar ausgebildet sein. Sein Aufbau entspricht im Wesentlichen dem des Schaltventils 251 gemäß den vorhergehenden Ausführungsbeispielen.

Von der Leitung 261 zweigt stromabwärts des Druckfilters 265 eine Leitung 281 ab, die zu einer Ventilfläche 283 des ersten Schaltventils 251 führt. Wird die Ventilfläche 283 mit Druck beaufschlagt, so wird das Schaltventil 251 in seinen zweiten Extremalzustand verlagert, in welchem der Anschuss 253 mit dem Anschluss 257 verbunden ist. Hierbei ist der Anschluss 257 durch eine Leitung 285 mit der Leitung 83 verbunden, von welcher, wie zuvor von der Leitung 263, die Leitung 81 und 85 abzweigen. Das zweite Schaltventil 269 wirkt somit als Pilotventil für das erste Schaltventil 251. In seiner ersten dargestellten Extremalstellung verbindet das zweite Schaltventil 269 die Anschlüsse 275 und 272 miteinander, sodass der Aktor 229 hydraulisch drucklos geschaltet ist. In seiner zweiten Extremalstellung verbindet das Schaltventil 269 die Anschlüsse 271 und 275 miteinander, sodass von der Druckquelle 249 kommendes, druckbeaufschlagtes Hydraulikmedium dem Aktor 229 zugeführt und die Parksperre ausgelegt wird. Gleichzeitig wird der Druck durch die Leitung 281 auf die Ventilfläche 283 geleitet, wodurch das erste Schaltventil 251 betätigt und in seine zweite Extremalstellung verlagert wird, in welcher die Anschlüsse 253 und 257 miteinander verbunden sind. Dadurch werden vorliegend die Druckregelventile 101, 101', 141 mit der Druckquelle 249 verbunden, sodass Schalt- und Kuppelvorgänge möglich beziehungsweise durchführbar sind. Wird die Parksperre 227 eingelegt, das Schaltventil 269 also in seinen ersten Extremalzustand verlagert, fällt auch der Druck an der Ventilfläche 283 des ersten Schaltventils 251 weg, sodass dieses aufgrund der Rückstellkraft der Rückstellfeder in seinen ersten Extremalzustand zurückverlagert wird, wodurch auch die Druckregelventile 101, 101' und 141 drucklos geschaltet werden. Hierdurch ergeben sich die oben bereits beschriebenen Vorteile. Durch das Vorsehen des zweiten Schaltventils 269 als Pilotventil wird die Sicherheit des Gesamtsystems weiter erhöht. Darüber hinaus entfällt die elektrische Betätigung des ersten Schaltventils 251. Die Schalteinrichtung 247 umfasst gemäß diesem Ausführungsbeispiel somit nur ein betätigbares Schaltventil 269, sodass durch Betätigen der Schalteinrichtung 247 zwei Schaltventile betätigt werden, sich jedoch die gleichen Folgen wie zuvor mit erhöhter Sicherheit ergeben. Auch wird durch Vorsehen des zweiten Schaltventils 269 erreicht, dass beide Schaltventile optimal auf ihren jeweiligen Verwendungszweck abgestimmt beziehungsweise angepasst ausgebildet werden können.

Figur 6 zeigt eine beanspruchte alternative Ausführungsform der in Figur 5 dargestellten Weiterbildung, bei welcher das Druckregelventil 141 wiederum über die Leitung 85 direkt mit der Leitung 73 verbunden ist, sodass durch Betätigung der Parksperre gleichzeitig nur ein Hydraulikteilkreis beziehungsweise Teilfunktionen des Doppelkupplungsgetriebes deaktiviert oder aktiviert werden. In diesem Fall werden beim Einlegen der Parkbremse gleichzeitig die Kupplungen des Doppelkupplungsgetriebes drucklos geschaltet, unabhängig von der Schaltposition/-stellung des Druckregelventils 141. Natürlich ist es auch denkbar, mehrere zweite Druckregelventile den Gangstellern vor- und der Schalteinrichtung 247 nachzuschalten, wobei dann mindestens eines der zweiten Druckregelventile, vorzugsweise alle zweiten Druckregelventile, bei Einlegen der Parkbremse drucklos geschaltet werden.

### BEZUGSZEICHENLISTE

- 1: Hydraulikkreis
- 3: Tank
- 5: Elektromotor
- 7: erste Pumpe
- 9: zweite Pumpe
- 11: Trennelement
- 13: Leitung
- 15: Leitung
- 17: T-Stück
- 19: Leitung
- 21: Saugfilter
- 23: Leitung
- 25: Abzweigung
- 27: Druckbegrenzungsventil
- 29: Leitung
- 31: Druckfilter
- 33: Anschluss
- 35: Schaltventil
- 37: Bypass
- 39: Differenzdruckventil
- 41: Anschluss
- 43: Anschluss
- 45: Anschluss
- 47: Anschluss
- 49: Leitung
- 51: Rückschlagventil
- 53: Druckspeicher
- 55: Druckerfassungseinrichtung
- 57: Leitung
- 59: Hydraulikteilkreis
- 61: Leitung
- 63: Leitung
- 65: Ventilfläche
- 67: Ventilfläche
- 69: Leitung
- 71: Abzweigung
- 73: Leitung
- 74: Druckleitung
- 75: Abzweigung
- 77: Abzweigung
- 79: Abzweigung
- 81: Leitung
- 83: Leitung
- 85: Leitung
- 87: Teilgetriebekreis
- 89: Anschluss
- 91: Schaltventil
- 91': Schaltventil
- 93: Anschluss
- 95: Anschluss
- 97: Leitung
- 99: Anschluss
- 101: Druckregelventil
- 101': Druckregelventil
- 103: Anschluss
- 105: Leitung
- 107: Anschluss
- 109: Leitung
- 111: Rückschlagventil
- 113: Abzweigung
- 115: Leitung
- 117: Abzweigung
- 119: Druckerfassungseinrichtung
- 121: Pilotventil
- 121': Pilotventil
- 123: elektrische Ansteuerung
- 125: Anschluss
- 127: Anschluss
- 129: Anschluss
- 131: Leitung
- 133: Abzweigung
- 135: Leitung
- 137: Ventilfläche
- 139: Teilgetriebekreis
- 141: Druckregelventil
- 143: Leitung
- 145: Abzweigung
- 147: Leitung
- 149: Leitung
- 151: Abzweigung
- 153: Leitung
- 155: Gangstellerzylinder
- 155': Gangstellerzylinder
- 157: Gangstellerzylinder
- 157': Gangstellerzylinder
- 159: Volumensteuerventil
- 159': Volumensteuerventil
- 161: Anschluss
- 163: Anschluss
- 165: Anschluss
- 167: Anschluss
- 169: Kammer
- 171: Kammer
- 173: Kolben
- 175: Abzweigung
- 177: Leitung
- 179: Volumensteuerventil
- 179': Volumensteuerventil
- 181: Leitung
- 183: Kühler
- 185: Volumensteuerventil
- 187: Abzweigung
- 189: Leitung
- 191: Druckbegrenzungsventil
- 193: Abzweigung
- 195: Bypass
- 197: Differenzdruckventil
- 199: Anschluss
- 201: Anschluss
- 203: Anschluss
- 205: Anschluss
- 207: Anschluss
- 209: Leitung
- 211: Abzweigung
- 213: Leitung
- 215: Druckfilter
- 217: Bypass
- 219: Differenzdruckventil
- 221: Kühlung
- 223: Kühlung
- 225: Teilkreis
- 227: Parksperre
- 229: Aktor
- 231: Zylinder
- 233: Kolben
- 235: Parksperrelement
- 237: Halteelement
- 239: Haltevorrichtung
- 241: Elektromagnet
- 243: Sperrmechanik
- 245: Rückstellfeder
- 247: Schalteinrichtung
- 249: Druckquelle
- 251: Schaltventil
- 253: Anschluss
- 255: Anschluss
- 257: Anschluss
- 259: Druckfilter
- 261: Leitung
- 263: Leitung
- 265: Druckfilter
- 267: Anschluss
- 269: Schaltventil
- 271: Anschluss
- 273: Anschluss
- 275: Anschluss
- 277: Druckfilter
- 279: Leitung
- 281: Leitung
- 283: Ventilfläche
- 285: Leitung

- K1: Kupplung
- K2: Kupplung

## Patentansprüche

1. Kupplungsgetriebe, insbesondere Doppelkupplungsgetriebe für ein Fahrzeug, insbesondere Kraftfahrzeug, mit mindestens einem Schaltgetriebe, das eine hydraulisch betätigbare Kupplung (K1,K2) und mindestens einen hydraulisch betätigbaren Gangsteller (155,157,155',157') umfasst, und mit einem ein druckloses Hydraulikmedium bereitstellenden Tank (3) sowie eine druckbeaufschlagtes Hydraulikmedium bereitstellende Druckquelle (249) umfassenden Hydraulikkreis (1), wobei der jeweiligen Kupplung (K1,K2) zu deren Betätigung jeweils ein erstes Druckregelventil (101,101') und dem jeweiligen Gangsteller (155,157,155',157') mindestens ein zweites Druckregelventil (141) vorgeschaltet ist, wobei wenigstens eines der Druckregelventile (101,101';141) mit einer vorgeschalteten Schalteinrichtung (247) verbunden ist, die das wenigstens eine Druckregelventil (101,101'; 141) und eine hydraulisch betätigbare Parksperre (227) entweder mit der Druckquelle (249) oder mit dem Tank (3) verbindet, **dadurch gekennzeichnet, dass** das mindestens eine zweite Druckregelventil (141) direkt mit der Druckquelle (249) verbunden ist.

2. Kupplungsgetriebe nach Anspruch 1, **dadurch gekennzeichnet, dass** die ersten (101,101') Druckregelventile und/oder das zweite Druckregelventil (141) mit der Schalteinrichtung (247) verbunden sind.

3. Kupplungsgetriebe nach einem der vorhergehenden Ansprüche, **dadurch gekennzeichnet, dass** die Schalteinrichtung (247) wenigstens ein erstes Schaltventil (251) aufweist, das an einem ersten Anschluss (257) mit dem Druckregelventil (101,101'; 141), an einem zweiten Anschluss (253) mit der Druckquelle (249) und an einem dritten Anschluss (255) mit dem Tank (3) verbunden ist.

4. Kupplungsgetriebe nach einem der vorhergehenden Ansprüche, **dadurch gekennzeichnet, dass** der erste Anschluss (257) des ersten Schaltventils (251) außerdem mit der Parksperre (227) verbunden ist.

5. Kupplungsgetriebe nach einem der vorhergehenden Ansprüche, **dadurch gekennzeichnet, dass** die Schalteinrichtung (247) ein zweites Schaltventil (269) aufweist, das mit der Druckquelle (249), dem Tank (3) und der Parksperre (227) verbunden ist, wobei das zweite Schaltventil (269) als Pilotventil wirkend dem ersten Schaltventil (251) zugeordnet ist.

6. Kupplungsgetriebe nach einem der vorhergehenden Ansprüche, **dadurch gekennzeichnet, dass** zumindest das mit der Parksperre (227) verbundene Schaltventil (251,269) eine Rückstellfeder aufweist, die das Schaltventil (251,269) in eine erste Extremalstellung drängt, in welcher die Parksperre (227) zu ihrer Drucklosschaltung mit dem Tank (3) verbunden ist.

7. Kupplungsgetriebe nach einem der vorhergehenden Ansprüche, **dadurch gekennzeichnet, dass** zumindest das mit der Parksperre (227) verbundene Schaltventil (251) wenigstens eine Ventilfläche (283) aufweist, die zur Druckregelung beziehungsweise Druckrückführung mit der Druckquelle (249) verbunden ist.

8. Kupplungsgetriebe nach einem der vorhergehenden Ansprüche, **dadurch gekennzeichnet, dass** die Druckquelle (249) wenigstens eine elektromotorisch antreibbare Pumpe (7,9) und/oder wenigstens einen hydraulischen Druckspeicher (53) umfasst.

9. Kupplungsgetriebe nach einem der vorhergehenden Ansprüche, **dadurch gekennzeichnet, dass** zumindest das mit der Parksperre (227) verbundene Schaltventil (251,269) die Druckquelle (249), insbesondere den Druckspeicher (53), mit dem Tank (3) verbindet, wenn auch die Parksperre (227) mit dem Tank (3) verbunden ist.

## Claims

1. Clutch transmission, in particular dual clutch transmission for a vehicle, in particular motor vehicle, with at least one manual transmission, which comprises an hydraulically operated clutch (K1, K2) and at least one hydraulically operated gear actuator (155, 157, 155', 157'), and with an hydraulic circuit (1) comprising a tank (3) providing an unpressurised hydraulic medium as well as a pressure source (249) providing a pressurised hydraulic medium, wherein a first pressure control valve (101, 101') is provided in each case upstream of the respective clutch (K1, K2) for the activation thereof and at least one second pressure control valve (141) is provided upstream of the respective gear actuator (155, 157, 155', 157'), wherein at least one of the pressure control valves (101, 101'; 141) is connected to an upstream switching device (247), which connects the at least one pressure control valve (101, 101'; 141) and an hydraulically operated parking brake (227) either to the pressure source (249) or to the tank (3), **characterised in that** the at least one second pressure control valve (141) is directly connected to the pressure source (249).

2. Clutch transmission according to claim 1, **characterised in that** the first (101, 101') pressure control valve and/or the second pressure control valve (141) are connected to the switching device (247).

3. Clutch transmission according to either of the preceding claims, **characterised in that** the switching device (247) has at least one first switching valve (251), which is connected to the pressure control valve (101, 101'; 141) at a first connection (257), to the pressure source (249) at a second connection (253) and to the tank (3) at a third connection (255).

4. Clutch transmission according to any one of the preceding claims, **characterised in that** the first connection (257) of the first switching valve (251) is also connected to the parking brake (227).

5. Clutch transmission according to any one of the preceding claims, **characterised in that** the switching device (247) has a second switching valve (269) which is connected to the pressure source (249), the tank (3) and the parking brake (227), wherein the second switching valve (269) acting as a pilot valve is assigned to the first switching valve (251).

6. Clutch transmission according to any one of the preceding claims, **characterised in that** at least the switching valve (251, 269) connected to the parking brake (227) has a return spring, which pushes the switching valve (251, 269) into a first extreme position, in which the parking brake (227) is connected to the tank (3) to relieve the pressure thereof.

7. Clutch transmission according to any one of the preceding claims, **characterised in that** at least the switching valve (251) connected to the parking brake (227) has at least one valve surface (283) which is connected to the pressure source (249) for pressure regulation and pressure feedback.

8. Clutch transmission according to any one of the preceding claims, **characterised in that** the pressure source (249) comprises at least one electromotively operated pump (7, 9) and/or at least one hydraulic pressure reservoir (53).

9. Clutch transmission according to any one of the preceding claims, **characterised in that** at least the switching valve (251, 269) connected to the parking brake (227) connects the pressure source (249), in particular the pressure reservoir (53) to the tank (3) even if the parking brake (227) is connected to the tank (3).

## Revendications

1. Engrenage à couplage, en particulier engrenage à couplage double pour un véhicule, en particulier un véhicule automobile, avec au moins une boîte de vitesses, qui comprend un embrayage à actionnement hydraulique (K1, K2) et au moins un sélecteur de vitesse à actionnement hydraulique (155, 157, 155', 157'), et avec un circuit hydraulique (1) comprenant un réservoir (3) mettant à disposition un milieu hydraulique sans pression ainsi qu'une source de pression (249) mettant à disposition un milieu hydraulique sollicité en pression, dans lequel respectivement une première soupape de régulation de pression (101, 101') est montée en amont de l'embrayage (K1, K2) respectif pour son actionnement et au moins une deuxième soupape de régulation de pression (141) est montée en amont du sélecteur de vitesse (155, 157, 155', 157') respectif, dans lequel au moins une des soupapes de régulation de pression (101, 101' ; 141) est reliée à un dispositif de commutation (247) monté en amont, qui relie l'au moins une soupape de régulation de pression (101, 101'; 141) et un verrouillage de stationnement (227) à commande hydraulique soit à la source de pression (249) soit au réservoir (3), **caractérisé en ce que** l'au moins une deuxième soupape de régulation de pression (141) est reliée directement à la source de pression (249).

2. Engrenage à couplage selon la revendication 1, **caractérisé en ce que** les premières (101, 101') soupapes de régulation de pression et/ou la deuxième soupape de régulation de pression (141) sont reliées au dispositif de commutation (247).

3. Engrenage à couplage selon l'une quelconque des revendications précédentes, **caractérisé en ce que** le dispositif de commutation (247) présente au moins une première soupape de commutation (251), qui est reliée au niveau d'un premier raccord (257) à la soupape de régulation de pression (101, 101' ; 141), au niveau d'un deuxième raccord (253) à la source de pression (249) et au niveau du troisième raccord (255) au réservoir (3).

4. Engrenage à couplage selon l'une quelconque des revendications précédentes, **caractérisé en ce que** le premier raccord (257) de la première soupape de commutation (251) est relié en outre au verrouillage de stationnement (227).

5. Engrenage à couplage selon l'une quelconque des revendications précédentes, **caractérisé en ce que** le dispositif de commutation (247) présente une deuxième soupape de commutation (269), qui est reliée à la source de pression (249), au réservoir (3) et au verrouillage de stationnement (227), dans lequel la deuxième soupape de commutation (269) est associée agissant en tant que soupape pilote à la première soupape de commutation (251).

6. Engrenage à couplage selon l'une quelconque des revendications précédentes, **caractérisé en ce qu'**au moins la soupape de commutation (251, 269) reliée au verrouillage de stationnement (227) présente un ressort de rappel, qui force la soupape de commutation (251, 269) dans une première position extrême, dans laquelle le verrouillage de stationnement (227) est relié pour sa commutation sans pression au réservoir (3).

7. Engrenage à couplage selon l'une quelconque des revendications précédentes, **caractérisé en ce qu'**au moins la soupape de commutation (251) reliée au verrouillage de stationnement (227) présente au moins une surface de soupape (283), qui est reliée pour la régulation de pression respectivement le retour de pression à la source de pression (249).

8. Engrenage à couplage selon l'une quelconque des revendications précédentes, **caractérisé en ce que** la source de pression (249) comprend au moins une pompe pouvant être entraînée par moteur électrique (7, 9) et/ou au moins un accumulateur de pression hydraulique (53).

9. Engrenage à couplage selon l'une quelconque des revendications précédentes, **caractérisé en ce qu'**au moins la soupape de commutation (251, 269) reliée au verrouillage de stationnement (227) relie la source de pression (249), en particulier l'accumulateur de pression (53), au réservoir (3), lorsque le verrouillage de stationnement (227) est relié au réservoir (3).
